# EUROPEAN PATENT SPECIFICATION

(11) **EP 2 165 427 B1**
(45) Date of publication and mention of the grant of the patent: **15.02.2017**
(21) Application number: 07769055.0
(22) Date of filing: 06.07.2007
(51) Int. Cl.: H04B 7/06, H04L 1/00, H04L 1/06

(54) **METHOD AND ARRANGEMENTS FOR COMMUNICATION OF CHANNEL QUALITY INFORMATION IN A TELECOMMUNICATIONS SYSTEM**
VERFAHREN UND ANORDNUNGEN ZUR ÜBERMITTLUNG VON KANALQUALITÄTSINFORMATIONEN IN EINEM TELEKOMMUNIKATIONSSYSTEM
PROCÉDÉ ET ARRANGEMENTS POUR UNE COMMUNICATION D'INFORMATIONS DE QUALITÉ DE CANAL DANS UN SYSTÈME DE TÉLÉCOMMUNICATIONS

(43) Date of publication of application: 24.03.2010
(73) Proprietor: Telefonaktiebolaget LM Ericsson (publ), 164 83 Stockholm (SE)
(72) Inventor: MOLNAR, Karl, J., Cary, NC 27513 (US); ASTELY, David, S-168 56 Bromma (SE); SUNDIN, Tomas, S-111 34 Sollentuna (SE)
(74) Representative: Brann AB
(86) International application number: PCT/SE2007/050509
(87) International publication number: WO 2009/008787

(56) References cited:
- EP-A2- 1 533 966
- WO-A1-2005/109717
- US-A1- 2005 181 739
- US-A1- 2006 034 244
- US-A1- 2006 079 221
- JIHOON CHOI ET AL.: 'Interpolation Based Unitary Precoding for Spatial Multiplexing MIMO-OFDM with Limited Feedback', [Online] 2004, XP010758883 Retrieved from the Internet: <URL:http://www.ieeexplore.ieee.org/iel5/94 81/30077/01377942.pdf?arnumber=1377942>
- 'Technical Report, 3rd Generation Partnership Project; Technical Specification Group Radio Access Network; Multiple Input Multiple Output in UTRA (Release 7)' 3GPP TR 25.876 V7.0.0, [Online] 2004, XP003022032 Retrieved from the Internet: <URL:http://www.3gpp.org/ftp/Specs/html-inf o/25876.htm>

## Description

### TECHNICAL FIELD

The present invention relates to methods and arrangements for channel quality indicator (CQI) reporting in a wireless telecommunications system, and more particularly to methods and arrangements that allow for adaptation of CQI reporting to a considered antenna configuration.

### BACKGROUND

In wireless communication systems, such as those operating in accordance with 3GPP WCDMA standards for high-speed packet access (HSPA) or according to the 3GPP standards that are currently being developed under the project name LTE (Long Term Evolution), the base station (also referred to as NodeB or eNodeB) is able to transmit on a shared downlink channel to a number of mobile terminals (also called user equipments, UEs). One or multiple transmit antennas can be involved in this transmission according to different transmission techniques. In order for the base station to e.g. determine proper data rate, modulation scheme, and transmit power, it needs to have some measure of how "good" the channel currently is. Accordingly, the mobile terminal provides a measure of channel quality to the base station by means of Channel Quality Indicator (CQI) values that are continuously fed back to the base station on an uplink. The mobile terminal determines the CQI values based on measurements made on e.g. pilot signals transmitted from the base station. Depending on the type of telecommunication system a number of possible channel quality levels may be specified, wherein each channel quality level corresponds to certain channel quality measurements and each level may be associated with a respective CQI value represented by e.g. a 4-bit word.

CQI reporting allows for the base station to adapt its downlink transmission to the changing channel quality. However, the uplink bandwidth is a limited resource. There are therefore two competing interests relating to CQI reporting. One is to provide as detailed CQI reports as possible as frequently as possible in order for the base station to be able to adapt its transmission in the best possible way to the changing channel quality. The other is to keep the amount of CQI reporting low so as to fill up as little as possible of the available uplink bandwidth.

The use of multi-antenna schemes makes CQI reporting far more complex than for single-antenna schemes. In a multi-antenna concept proposed for the high-speed downlink packet-data access (HSDPA) mode of the WCDMA system, selecting a subset of antennas from which to transmit is considered an extension of fast link adaptation. This leads to transmission on an antenna mode more closely matched to the propagation conditions compared to multi-antenna schemes that always transmit from the same antennas. In HSDPA, per-antenna rate control (PARC) is one multi-antenna approach that provides higher downlink data rates. In this approach, separate transmission rates are provided for the data streams mapped to each transmit antenna. When both the rates and the transmit antenna subset are selected adaptively, this is denoted as selective-PARC (S-PARC). The CQI that is estimated at the mobile and transmitted on the uplink to the base station is part of the link adaptation process and allows for antenna selection and rate assignment to be performed. Since the signals transmitted from different antennas interfere with each other, the estimated CQI changes for each combination of transmit antennas. Providing CQI estimates for each antenna under each combination utilizes an increasing amount of the available uplink resource compared to single-antenna transmission.

The type of receiver employed may also increase the number of CQI values that may be fed back to the base station. For example, using a successive interference cancellation (SIC) receiver places a decoding ordering on the transmit antennas so that there will be a separate CQI value for each permutation (rather than combination) of antennas. For HSDPA, multiple spreading codes are used to either transmit a higher data rate to an individual user, or to transmit at lower rates simultaneously to multiple users. To conserve spreading codes in the previously proposed multi-antenna approach, spreading codes are reused across the different transmit antennas. In practice, CQI reporting is usually performed under the assumption of some fixed number of spreading codes assigned to a user. To obtain the CQI values for a different number of spreading codes, the CQI values are scaled appropriately. This is possible since all spreading codes are transmitted over the same propagation channel.

For OFDM systems such as LTE and WiMax, the frequency band is subdivided into many separate subcarriers. Depending on the amount of dispersion in the propagation channel, different parts of the frequency band can potentially undergo different fading realizations. In the extreme, under severe dispersion, each subcarrier might have different fading. This places additional complexity on the CQI reporting process when user(s) are assigned to the different subcarriers adaptively. For S-PARC, the amount of CQI reporting is already increased by the number of different antenna combinations (permutations) to be reported. With the subdivision of the frequency band into subcarriers the amount of CQI that may be reported grows even further.

As mentioned above it is desired to keep the amount of feedback used for CQI reporting low, both so that the CQI can be reliably transmitted and to not use up a large portion of the uplink bandwidth. This becomes especially important when the number of active mobiles in the system increases.

One approach for reducing the complexity of CQI feedback for S-PARC is described in the U.S. Patent Application Publication No. US 2005/0250544 A1 when coupled with a SIC receiver. This approach first chooses the antenna that provides the best rate and uses that for single-antenna transmission. In considering transmission with two antennas, the two-antenna subset is constrained to contain the best antenna previously found for single-antenna transmission and the antenna with the next-best rate. This approach is repeated for the three- and four-antenna subsets and in general is called the 'subset property' as related to antenna selection. Implicitly, an order is given to the antennas so that the first antenna has the greatest transmit rate while the last antenna has the lowest transmit rate. This ordering of antennas from lowest to greatest rates is the order that the SIC-receiver processes the received signals. Thus, a large number of antenna orderings is avoided by constraining the antenna order and subset selection via use of this subset property.

Clearly, trying to report an antenna order for each subcarrier would be very costly in terms of CQI feedback. Additionally, it would be impractical since transmitted streams are likely encoded over different subcarriers, and the SIC receiver utilizes the decoded/re-encoded signals as part of the detection process.

EP 1 533 966 A2 discloses transmitting/receiving channel quality information (CQI) of subcarriers in an OFDM system where data is transmitted on the subcarriers via one or more transmit antennas. The subcarriers are grouped into subcarrier groups each having at least one subcarrier and further grouped into subgroups each having one or more subgroups. A user equipment generates CQIs for one or more allocated subcarrier groups and the transmit antennas or CQIs for the allocated subcarrier groups, the subgroups of the subcarrier groups, and the transmit antennas. The group CQIs and the subgroup CQIs are transmitted to a Node B in one or more physical channel frames.

### SUMMARY

As mentioned above the amount of CQI that may be reported increases with the use of antenna configurations including multiple antennas. An object of the present invention is therefore to provide methods and arrangements that support adaptation of the amount of CQI reporting to a considered antenna configuration.

The above stated object is achieved by means of a mobile terminal, a base station and a method according to the claims.

A first embodiment of the present invention provides a mobile terminal device for use in a wireless communications system. The mobile terminal device comprises a receiver for receiving a signal from M number of transmit antennas, wherein the signal includes a number of subcarriers. The mobile terminal device also comprises a processing unit for determining a CQI reporting format for a collection of the subcarriers based on a selected transmit antenna configuration associated with the collection of subcarriers and for determining P_{CQI} number of CQI values relating to the collection of subcarriers in accordance with a determined CQI reporting format. The processing unit is arranged to adapt the CQI reporting format to the selected transmit antenna configuration such that the granularity of CQI reporting depends on the number m of transmit antennas of the selected transmit antenna configuration. The mobile terminal device further comprises a transmitter for transmitting the P_{CQI} CQI values to a base station in a feedback signal.

A second embodiment of the present invention provides a method in a mobile terminal device. The method comprises a step of receiving a signal from M number of transmit antennas, which signal includes a number of subcarriers. The method also comprises a step of determining a CQI reporting format for a collection of the subcarriers based on a selected transmit antenna configuration associated with the collection of subcarriers. The CQI reporting format is adapted to the selected transmit antenna configuration such that the granularity of CQI reporting depends on the number m of transmit antennas of the selected transmit antenna configuration. The method further comprises a step of determining P_{CQI} number of CQI values relating to the collection of subcarriers in accordance with the determined CQI reporting format and a step of transmitting the P_{CQI} CQI values to a base station in a feedback signal.

A third embodiment of the present invention provides a base station for use in a wireless communications system. The base station comprises a transmitter for transmitting a signal including a number of subcarriers from M number of transmit antennas. The base station also comprises a receiver for receiving a feedback signal from a mobile terminal device and a processing unit for processing the feedback signal to extract P_{CQI} number of CQI values relating to a collection of the subcarriers and to extract antenna configuration information specifying a selected transmit antenna configuration. The CQI values are in accordance with a CQI reporting format which depends on the selected transmit antenna configuration such that the granularity of the CQI reporting depends on the number of antennas of the selected transmit antenna configuration.

Advantages and features of embodiments of the present invention will become apparent when reading the following detailed description in conjunction with the drawings.

### BRIEF DESCRIPTION OF THE DRAWINGS

Fig. 1 is a schematic diagram illustrating a wireless communication system in which the present invention may be implemented.
Fig. 2 is a schematic diagram illustrating a CQI reporting format for one transmit antenna according to an embodiment of the present invention.
Fig. 3 is a schematic diagram illustrating a CQI reporting format for two transmit antennas according to an alternative embodiment of the present invention.
Fig. 4 is a schematic diagram illustrating a CQI reporting format for four transmit antennas according to another alternative embodiment of the present invention.
Fig. 5 is a schematic diagram illustrating an alternative CQI reporting format for two transmit antennas according to yet another alternative embodiment of the present invention.
Fig. 6 is a schematic diagram illustrating another alternative CQI reporting format for four transmit antennas according to a further alternative embodiment of the present invention.
Fig. 7 is a flowchart illustrating a method according to an embodiment of the present invention.
Fig. 8 is a flowchart illustrating a method for determining CQI values according to an embodiment of the present invention.

### DETAILED DESCRIPTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

While recognizing that there are different trade-offs that can be made to reduce CQI reporting. The invention discloses embodiments for reporting CQI with a granularity in time, space and frequency that is coupled to an adaptive antenna configuration considered to be used for transmission from a base station. In addition, signaling schemes for reporting this CQI information from the mobile to the base station are also disclosed. For OFDM systems, since users are assigned to use specific subcarriers over time and frequency, it is desirable to have the CQI reports matched to a similar time and frequency range. Such considerations occur, for example, when users are scheduled adaptively within sub-bands of the entire OFDM signal bandwidth, or when a fixed subcarrier partitioning of the frequency band is used. It is desired to keep the amount of feedback used for CQI reporting low, both so that the CQI can be reliably transmitted and to not use up a large portion of the uplink bandwidth. This becomes especially important when the number of active mobiles in the system increases.

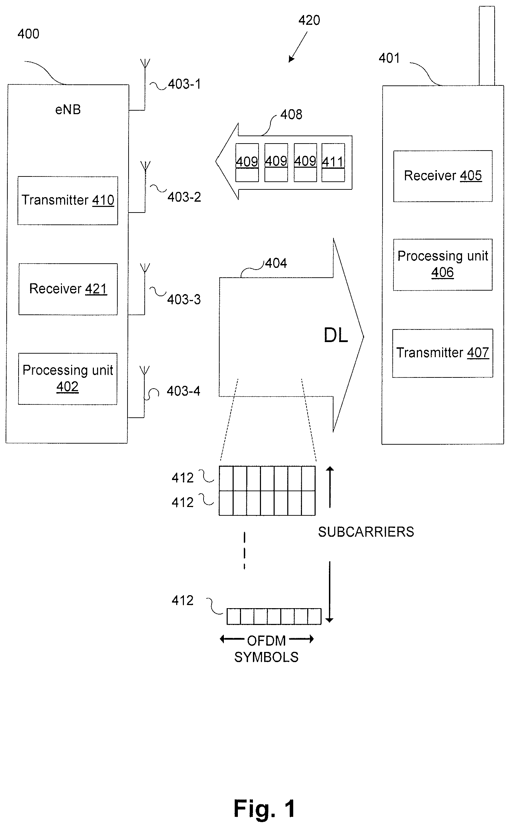

Fig. 1 is a schematic block diagram of a wireless communications system 420, e.g. an LTE system that implements OFDM as radio access technology, in which the present invention may be implemented. The system 420 comprises a radio base station 400 (also called Evolved NodeB (eNB) according to LTE terminology) and a mobile terminal device 401, which for instance may be a mobile phone, a laptop computer, a PDA (personal digital assistant) or some other type of user equipment (UE). It should be understood that certain details and components in the mobile terminal device 401 and in the base station 400 are well known to the person skilled in the art. Therefore, for clarity, the description of the mobile terminal device 401 and the base station 400 provided below omits those well know details and components, that are not necessary to understand the present invention.

As shown in Fig. 1, the base station 400 has four transmit antennas 403-1, 403-2, 403-3 and 403-4. However the present invention may be used in connection with base stations with any number of antennas. In this application M will be used to denote the number of transmit antennas of the base station. The base station 400 further includes a transmitter 410 for transmitting a shared downlink (DL) signal 404, in this example an OFDM signal, including a number of subcarriers 412 to a number of mobile terminals, such as the mobile terminal 401. The different subcarriers 412 may be adaptively allocated to carry data and/or signaling to different mobile terminals. Fig. 1 shows a schematic illustration of a timeslot of the OFDM signal 404, which in this example is assumed to consist of 600 subcarriers 412 by seven OFDM symbols. The base station 400 also includes a receiver 421 for receiving uplink (UL) signals from mobile terminals, such as an uplink signal 408 from the mobile terminal device 401. In the uplink signal 408, feedback information such as CQI values 409 may be included. The base station is able to process the feedback signal 408 to e.g. extract and interpret the CQI values by means of a processing unit 402.

The base station 400 may choose to transmit data and/or signaling on different subcarriers 412 from all or a subset of the transmit antennas 403-1 403-2, 403-3, 403-4 according to different determined antenna configurations. In this application it is assumed that the base station determines an antenna configuration for a collection of adjacent subcarriers. Even if the base station has chosen to transmit data only from a subset of transmit antennas it is herein assumed that a pilot signal always is transmitted from each of the antennas e.g. for such purposes as channel quality measurements. Therefore it will always be possible for the mobile terminal 401 to estimate CQI values for all of the subcarriers from all of the transmit antennas.

The mobile terminal device 401 includes a receiver for receiving the downlink signal 404 and a transmitter for transmitting the uplink signal 408. The mobile terminal device is further equipped with a processing unit 406, which e.g. is able to determine CQI reporting formats to be used for CQI reporting as will be explained further below.

The channel quality on the downlink from the base station 400 to the mobile terminal 401 varies over the frequency band and will therefore differ between different subcarriers 412. The channel quality of a subcarrier will also depend on from which transmit antenna the subcarrier is transmitted and on interference from other transmit antennas. Therefore the mobile terminals device should ideally determine one CQI value per subcarrier for each antenna and for each possible transmit antenna configuration. However, since it in most cases would be far to costly to report CQI values for all possible antenna configurations, the mobile terminal will according to embodiments of the present invention select an antenna configuration for a collection of subcarriers and estimate CQI values for subcarriers of the collection with respect to the selected antenna configuration. Information specifying the selected antenna configuration that applies to different collections of subcarriers will be reported to the base station 400 in the uplink signal 408 in the form of antenna configuration information 411, which is schematically illustrated in Fig. 1. The base station is then able to decide to transmit according to the selected transmit antenna configuration or according to another determined antenna configuration that deviates from the selected transmit antenna configuration. In this application the term "selected antenna configuration" is used to denote the antenna configuration that the mobile terminal 401 has selected to consider when estimating CQI values, while the term "determined antenna configuration" is used to denote the antenna configuration that the base station 400 has decided to use for transmission. Furthermore, the number of antennas of the selected antenna configuration will be denoted by m, wherein 1 ≤ m ≤ M.

Depending on the type of receiver 405 of the mobile terminal the computation of CQI values may not only depend on the transmit antennas included in the selected antenna configuration but also on the order in which signals from the different antennas are decoded. The selected antenna configuration will therefore comprise a selected antenna order in those cases in which the decoding order has an impact on the CQI value estimates. In the cases where the decoding order does not matter the selected antenna configuration will only specify the considered subset of transmit antennas, i.e. without ordering. This will be further explained below in connection with a couple of specific examples of embodiments.

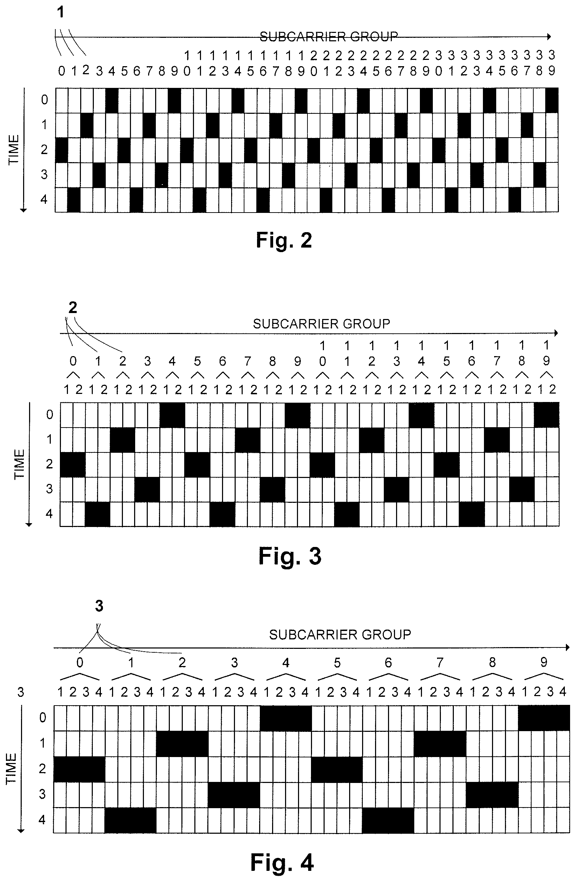

According to embodiments of the present invention the processing unit 406 of the mobile terminal is arranged to determine a CQI reporting format to be used for CQI reporting based on the number m of transmit antennas of the selected transmit antenna configuration. According to embodiments of the present invention the CQI reporting format is adapted such that the granularity of CQI reporting depends on the number m of transmit antennas of the selected transmit antenna configuration. Since the selected transmit antenna configuration may differ between different collections of subcarriers the CQI reporting format may also differ between different collections of subcarriers. Some different examples of CQI reporting formats according to different embodiments of the present invention will now be explained in further detail with reference to Figs. 2-6. For the sake of simplicity it will be assumed that all of the subcarriers represented in Figs. 2-6 respectively are associated with the same selected antenna configuration. CQI estimates could potentially be made for every subcarrier in the OFDM system. But according to embodiments of the invention the amount of CQI information sent from the mobile terminal 401 to the base station 400 is reduced by making CQI estimates for groups of subcarriers (in time and/or frequency) instead of for every subcarrier. This is illustrated in Figs. 2-6 in which the example system 420 is considered. As mentioned above the OFDM signal is made up of 600 subcarriers in the system 420.

Fig. 2 is a schematic representation of a CQI reporting format for reporting CQI for a selected transmit antenna configuration with a single transmit antenna. To reduce the amount of CQI information the subcarriers are collected into subcarrier groups of 15 adjacent subcarriers by 7 OFDM symbols and one CQI value is estimated for each subcarrier group. In this example, the OFDM signal transmitted over one time period is divided into 40 tiles. Each tile contains a subcarrier group 1 of 15 subcarriers by 7 OFDM symbols. If B=32 bits are allocated for CQI reporting, and each CQI value is represented as 4 bits, then 8 CQI values can be reported during each time period and 5 time periods are required to update the CQI over all subcarriers. According to Fig. 2 it is schematically illustrated that in each time period CQI-values for 8 of the subcarriers groups are reported (indicated as black tiles). In time period 0 CQI values are reported for subcarrier groups No. 4, 9, 14, 19, 24, 29, 34 and 39, in time period 1 CQI values are reported for subcarrier groups 2, 7, 12, 17, 22, 27, 32 and 37, etc.

To preserve the number of bits used for CQI reporting when the selected transmit antenna configuration has more than one antenna the granularity of the CQI reporting format is made larger, according to embodiments of the present invention, to accommodate for CQI information relating to the multiple antennas. The granularity may be changed in frequency and/or time. By making the subcarrier groups of adjacent subcarriers larger the granularity in frequency may be changed. This is shown in Figs. 3 and 4, which are another two different examples of CQI reporting formats according to embodiments of the invention. Fig. 3 is a schematic representation of a CQI reporting format for reporting CQI values for a selected transmit antenna configuration with two transmit antennas. In this embodiment of the invention the subcarrier groups 2 of adjacent subcarriers are made twice as large compared to the example with one transmit antenna in Fig. 2. For each subcarrier group 2, CQI values are computed for each of the two transmit antennas. CQI estimation is performed in this manner in order to model interference between the two transmit antennas accurately. According to Fig. 3 it is shown that in each time period CQI-values for four of the subcarriers groups for each of the two transmit antennas are reported (indicated as black tiles). In time period 0 CQI values are reported for subcarrier groups No. 4, 9, 14 and 19, in time period 1 CQI values are reported for subcarrier groups No. 2, 7, 12, and 17, etc. Compared to the example illustrated in Fig. 2 the granularity in frequency is larger since each CQI value in the example of Fig. 3 represents the channel quality for a larger group of subcarriers.
However, five time periods will still be required to make an entire CQI report for all subcarriers and the same amount of CQI information in terms of bits will be reported in each time period.

Fig. 4 is a schematic representation of a CQI reporting format for reporting CQI for a selected transmit antenna configuration with four transmit antennas. In this embodiment of the invention the subcarrier groups 3 of adjacent subcarriers are made four times as large compared to the example with one transmit antenna in Fig. 2. For each subcarrier group 3 CQI values are estimated for each of the four transmit antennas. CQI estimation is performed in this manner in order to model interference between the four transmit antennas accurately. According to Fig. 4 it is shown that in each time period CQI values for two of the subcarriers groups, for each of the four transmit antennas, are reported (indicated as black tiles). In time period 0 CQI values are reported for subcarrier groups No. 4 and 9, in time period 1 CQI values are reported for subcarrier groups No. 2 and 7, etc. Compared to the example in Fig. 3, the granularity in frequency of the CQI reporting format is made even larger in the example illustrated in Fig. 4.

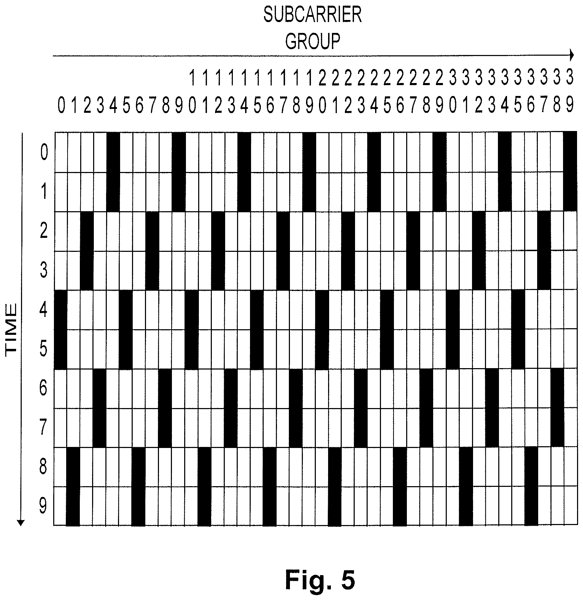

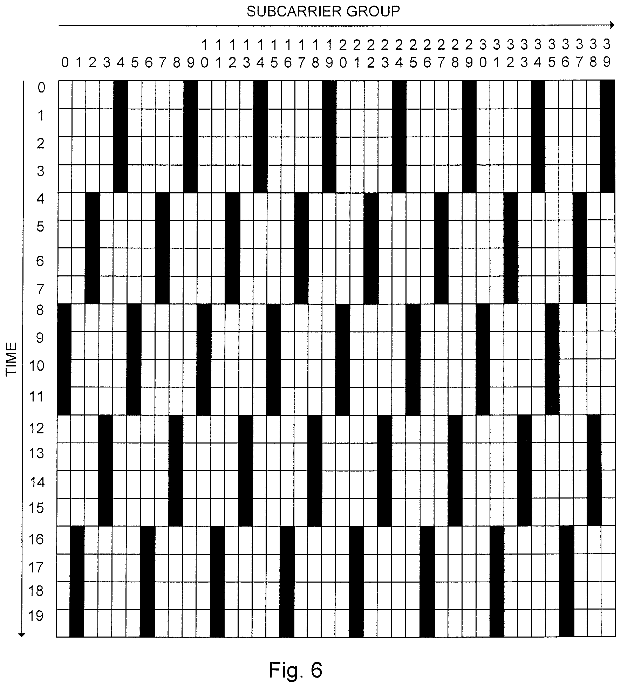

As mentioned above it is also possible to adapt the granularity of the CQI reporting format in time instead of in frequency in the case of selected transmit antenna configurations with multiple transmit antennas. This is illustrated in Figs. 5 and 6, which illustrate examples of CQI reporting formats according to embodiments of the present invention in case of selected transmit antenna configurations with two and four transmit antennas respectively. In Figs. 5 and 6 the sizes of the subcarrier groups are the same as in the example illustrated in Fig. 2. However, in the two transmit antenna case illustrated in Fig. 5 the CQI reporting for each subcarrier group will occur in two time slots, wherein CQI values for one of the two transmit antennas is reported in each of the two time slots. In time period 0 CQI values are reported for subcarrier groups No. 4, 9, 14, 19, 24, 29, 34 and 39 with respect to a first transmit antenna, in time period 1 CQI values are again reported for subcarrier groups No. 4, 9, 14, 19, 24, 29, 34 and 39 but with respect to a second transmit antenna, in time period 3 CQI values are reported for subcarrier groups No. 2, 7, 12, 17, 22, 27, 32 and 37 with respect to a first transmit antenna, in time period 4 CQI values are again reported for subcarrier groups No. 2, 7, 12, 17, 22, 27, 32 and 37 but with respect to a second transmit antenna, etc. In Fig. 5 ten time period will be required for making an entire CQI report for all subcarriers. In the four transmit antenna case illustrated in Fig. 6, twenty time periods will analogously be required for making an entire CQI report for all subcarriers. In each time period CQI values associated with eight different subcarrier groups with respect to one of the transmit antennas will be reported. During the following three time periods, CQI values relating to the same eight subcarrier groups will be reported but with respect to the remaining three transmit antennas.

As mentioned above it was assumed in connection with the examples illustrated in Figs. 2-6 that all 600 subcarriers were associated with the same selected transmit antenna configuration. However, the present invention is not limited to this case. It is possible to apply different selected transmit antenna configurations for different subcarriers or subcarrier groups. The natural choice would however be to apply the same selected transmit antenna configuration for multiple adjacent subcarrier groups as will be discussed further below. If we e.g. assume that a first selected transmit antenna configuration with one transmit antenna is applied for a first collection of subcarriers comprising the first 300 subcarriers of the system 420 and a second selected transmit antenna configuration with two transmit antennas is applied for a second collection of subcarriers comprising the remaining 300 subcarriers of the system 420, then CQI may be reported for the first collection with a first CQI reporting format having the pattern illustrated in Fig. 2 and for the second collection with a second CQI reporting format having the pattern illustrated in Fig. 3. According to the resulting combined CQI reporting format for the two collections of subcarriers eight CQI values would be reported in each time slot, four of those would relate to four subcarrier groups of the first collection and four would relate to two subcarrier groups of the second collection for each of the two transmit antennas.

If different selected transmit antenna configurations are applied for different collections of subcarriers of an OFDM signal, but the different selected transmit antenna configurations has the same number m of transmit antennas, then the actual CQI reporting format of the different collections of subcarriers may be the same. However, the different selected transmit antenna configurations may relate to different antenna orders or antenna subsets comprising different transmit antennas, which will have an impact on the actual CQI values even though the CQI reporting format may be the same.

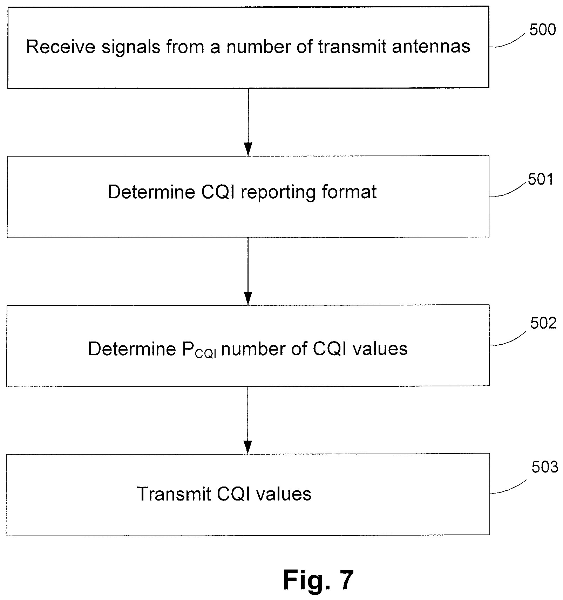

Fig. 7 is a flowchart illustrating a method according to an embodiment of the present invention. In a step 500 the mobile terminal device receives a signal from a number of transmit antennas, which signal includes a number of subcarriers. In a next step 501 a CQI reporting format is determined for a collection of the subcarriers based on a selected transmit antenna configuration associated with the collection of subcarriers. The CQI reporting format is as mentioned and exemplified above adapted to the selected transmit antenna configuration such that the granularity of CQI reporting depends on the number m of transmit antennas of the selected transmit antenna configuration. In a step 502 P_{CQI} number of CQI values are determined relating to the collection of subcarriers in accordance with the determined CQI reporting format. The determined CQI values are transmitted to a base station in a feedback signal in a step 503. Steps 502 and 503 may overlap such that some CQI values are determined and transmitted at a time as illustrated above in connection with Figs. 2-6. The granularity of the CQI reporting format can according to different embodiments of the invention be adapted both in time and/or in frequency depending on the number of transmit antennas of the selected transmit antenna configuration.

In one example embodiment of the method in Fig. 7 the step 501 involves adapting the granularity in frequency of the CQI reporting format by dividing the collection of subcarriers into Q number of non-overlapping subcarrier groups. In the step 502 one CQI value is then determined per subcarrier group for each transmit antenna of the selected transmit antenna configuration.

The number of non-overlapping subcarrier groups Q may according to another example embodiment of the present invention depend on the number m of transmit antennas of the selected transmit antenna configuration such that the number P_{CQI} of CQI values determined in the step 502 for the m transmit antennas of the selected transmit antenna configuration is substantively the same for different selected transmit antenna configurations having different number of transmit antennas.

In yet another example embodiment of the method in Fig. 7 the CQI reporting format is determined such that the Q subcarrier groups are divided into T non-overlapping subsets and such that the number P_{CQI} of CQI values determined in step 502 is transmitted in the step 503 during T time periods. This is done so that the CQI values relating to the subcarrier groups of one subset are transmitted in step 503 in each time period. This can be compared with the example embodiments illustrated in Figs. 2-4, wherein the subcarrier groups can be seen as divided into five subsets with the CQI values of one subset being reported in each time period. The subcarrier groups are preferably divided into subsets such that the number of CQI values transmitted in step 503 in each time period is the same or substantively the same.

According to different exemplary embodiments of the present invention the selected transmit antenna configuration may specify an antenna decoding order or an antenna subset as mentioned above. Information that specifies the selected transmit configuration is preferably transmitted in step 503 along with the determined CQI values.

The receiver 405 in Fig. 1 may be of several different types using different techniques for reception and decoding. The base station 400 can also use many different transmission techniques. Below two different example embodiments of the invention are described in which different techniques for transmission and reception are used. In the first example embodiment the receiver 405 is a SIC receiver and the transmission technique used by the base station 400 is S-PARC. In the second example embodiment interleaved coded modulation across space, time and frequency is used and the receiver 405 uses MMSE (Minimum Mean-Square Estimation) reception.

In the first example embodiment the decoding order in the SIC-receiver 405 affects the CQI values 409 obtained during the CQI calculation. However, in channel realizations that are frequency selective the optimal decoding order may change over the subcarrier groups for which CQI values is calculated. A further consideration is that the SIC receiver decodes a signal stream, then re-encodes it in order to subtract off its contribution to the received signal. Thus, the antenna decoding order should be matched to the length of the encoded signal.

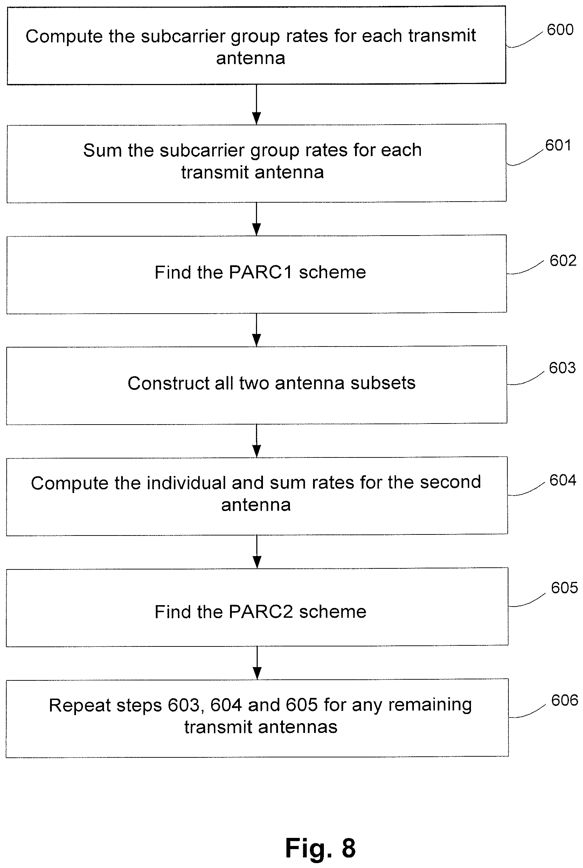

In general it is desired for the base station 400 to retain control over user scheduling and the assignment of mobile terminal devices 401 to different subcarriers 412 for downlink transmission. In this first example embodiment, a CQI value 409 is reported for each subcarrier group 1, 2, 3 under the assumption that a decoding order is chosen across multiple subcarrier groups 1, 2, 3. The decoding order must also be reported back to the base station 400. One approach for selecting the decoding order across multiple subcarrier groups 1, 2, 3 is based on the subset property described in US Patent Application 10841911 for SIC reception, and is described below with reference to a flowchart illustrated in Fig 8.

Step 600: Over a collection of multiple subcarrier groups compute the rates for each subcarrier group assuming a single transmit antenna is used for transmission over all subcarrier groups of the collection. Do this for each of the M transmit antennas (in Fig. 1 for the antennas 403-1, 403-2, 403-3 and 403-4).

Step 601: For each of the M transmit antennas sum the individual rates for each subcarrier group of the collection to get a total rate associated with that antenna.

Step 602: Denote the antenna with the largest rate as the antenna to use with the PARC1 scheme. The individual rates for the selected antenna are used as the subcarrier group CQI values 409 for that antenna.

Step 603: Next, construct all two-antenna subsets such that each two-antenna subset contains the antenna selected for PARC1 transmission.

Step 604: For each two-antenna subset, compute the individual and sum rates for the second transmit antenna assuming the antenna associated with the PARC1 signal is also used for PARC2 transmission.

Step 605: Choose the two-antenna subset with the highest rate and denote that approach as the PARC2 scheme. The individual rates for the second antenna are used as the subcarrier group CQI values 409 for the second antenna (combined with the previous PARC1 CQI values).

Step 606: Repeat steps 603, 604, and 605 for any remaining transmit antennas.

The decoding order for each transmit antenna scheme together with the estimated subcarrier group CQI values 409 for the different transmission antennas in the scheme is then transmitted back to the base station 400. By transmitting back the CQI values 409 for each subcarrier group 1, 2, 3, there is a different quantization in frequency between specifying the CQI values 409 and the antenna order for the SIC receiver 405. This allows the base station 400 to retain control in assigning users and their associated rates to smaller portions of the frequency band than is specified by the SIC receiver decoding order. The specific ordering of antennas used above also allows the base station 400 to choose the number of transmit antennas used for transmission, and arises naturally when used in combination with SIC reception.

In the second example embodiment the receiver 405 is based on minimum mean-square estimation (MMSE) and does not require an ordering of transmit antennas in its operation. This receiver 405 detects signals from one transmit antenna while cancelling the other transmit antennas signals. This can be used in conjunction with S-PARC transmission or selective bit-interleaved coded modulation over space, time and frequency. Here the latter approach is considered in which one coded data stream is transmitted that is multiplexed over transmit antennas as well as time and frequency. What is required, though, is to know the antenna subset assumed for transmission so the CQI values 409 can be computed under the same conditions. Thus, in this second example embodiment, rather than computing a decoding order over multiple subcarrier groups of subcarriers and transmitting that back to the base station 400, the selected transmit antenna configuration is determined by determining an antenna subset over multiple subcarrier groups of subcarriers. The antenna subset and the corresponding CQI values 409 are transmitted to the base station 400 in a manner similar to that used in the first example embodiment.

In the above described first and second example embodiments and in other embodiments CQI values 409 and the antenna order (or antenna subset) must be transmitted reliably from the mobile terminal 401 to the base station 400, which is referred to herein as transmit antenna configuration information. Typically, this information is encoded so that some specific performance criterion is met.

Consider e.g. the system 420 in Fig. 1 and assume that N is the number of bits in each reported CQI value 409, L is the number of bits to specify the antenna order or subset, m is the number of transmit antennas in the selected antenna configuration, and q is the number of subcarrier groups 1, 2, 3 for which CQI values 409 is reported in any one time period. The number of bits used to report CQI values in each time period is then qmN = 32 bits, assuming N=4 bits is used to specify each subcarrier group CQI value 409. Depending on how many subcarriers that are part of each subcarrier group it requires a different number of time periods T to make an entire CQI report for the entire OFDM signal, which constitutes all subcarriers. If the OFDM signal is divided into contiguous regions each comprising a collection of subcarriers and an antenna order or antenna subset is selected for each collection (here assuming that m is the same for each collection), then 5qmN + 5L = 180 bits are required to report CQI values 409 and the antenna order for the entire frequency band of the OFDM signal over five time periods, resulting in 36 bits per time period for each CQI feedback.

It is attractive if the number of feedback bits can be further reduced without severely impacting CQI performance. According to an embodiment of the invention this is accomplished by puncturing some bits representing the CQI values 409 to reduce the transmitted raw data rate required on the feedback signal 408. However, if this puncturing is random, then the most significant bits of the bits representing the subcarrier group CQI values may be affected and this may degrade CQI performance. Alternatively, according to a preferred embodiment of the invention the least significant bits (LSB) of the bits representing the CQI values 409 are replaced with the bits representing the antenna order (or antenna subset). In the above example, the 36 bit CQI feedback rate per time period could be reduced to 32 bits. Of course, CQI granularity of the punctured CQI values 409 is traded off for the reduced rate.

Not all subcarrier groups 1, 2, 3 will have the LSBs of their CQI values 409 replaced. Thus, there needs to be some mechanism for choosing the subcarrier groups 1, 2, 3 that will have those LSBs punctured. One choice is to choose a fixed set of CQI values 409 and to puncture their corresponding LSBs. However, this may reduce CQI performance unevenly across the different subcarrier groups 1, 2, 3. Alternatively, the subcarrier groups 1, 2, 3 can be chosen in a (pseudo-) random pattern, and the LSBs of the corresponding CQI values 409 can be punctured so that each subcarrier group is affected more evenly.

It will be apparent for the person skilled in the art from the description above that implementation of the present invention will require some adaptation of prior art mobile terminals and base stations. The natural choice is to implement the present invention by providing the mobile terminal device with new software, although implementations in firmware, hardware or combinations thereof are also feasible. The processing unit 406 in the mobile terminal 401 device will e.g. have to be adapted so that the processing unit can determine the CQI reporting format based on the selected transmit antenna configuration and to determine the P_{CQI} number of CQI values. This adaptation of the processing unit will generally imply new processing unit software compared to mobile terminal processing units according to prior art. Apart from adaptations in the mobile terminal device, some adaptation of the processing unit 402 in the base station 400 is required. The processing unit 402 in the base station 400 will e.g. have to be adapted so that the processing unit can interpret the feedback signal 408 correctly, i.e. extracting and interpreting CQI values and transmit antenna configuration information correctly.

An advantage of embodiments of the present invention is that the bandwidth required for CQI reporting can be balanced for transmission techniques involving multiple transmit antennas.

Another advantage of embodiments of the present invention is that it is applicable to several different types of systems. Such systems include OFDM systems like LTE, WiMax and the 4G systems currently being studied.

A further advantage of preferred embodiments of the present invention is that it is fairly easy to implement and does not require considerable modification of existing mobile terminal devices and base stations.

Yet another advantage of preferred embodiments of the present invention is that the CQI reporting format can be tailored to multiple mobile terminal devices, allowing different antenna configurations to be selected for each mobile terminal device.

Yet another advantage of preferred embodiments of the present invention is that the puncturing of least significant bits and replacing those with antenna configuration or decoding order information reduces the amount of CQI feedback and allows for a better encoding rate to protect this information during transmission from the mobile terminal device to the base station.

The present invention has been described above by means of description of embodiments of the invention. However there are many modifications that are possible as will be appreciated by the person skilled in the art.

From the description above the person skilled in the art will realize what software, firmware and/or hardware modifications are necessary and/or suitable in order to implement the different described embodiments of the present invention.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A mobile terminal device (401) for use in a wireless communications system (420), comprising:
a receiver (405) for receiving a signal (404) from M number of transmit antennas (403-1, 403-2, 403-3, 403-4), which signal includes a number of subcarriers (412);
wherein the mobile terminal device (401) is **characterized by** further comprising:
a processing unit (406) for determining a channel quality indicator, CQI, reporting format for a collection of said subcarriers based on a selected transmit antenna configuration associated with said collection of subcarriers and for determining P_{CQI}, number of CQI values, (409) relating to said collection of subcarriers in accordance with a determined CQI reporting format, wherein the processing unit is arranged to adapt the CQI reporting format to the selected transmit antenna configuration such that the granularity of CQI reporting depends on the number m of transmit antennas of the selected transmit antenna configuration; and
a transmitter (407) for transmitting said P_{CQI} CQI values to a base station (400) in a feedback signal (408).

2. The mobile terminal device (401) according to claim 1, wherein said collection of subcarriers (401) is divided into Q number of non-overlapping subcarrier groups (1, 2, 3) according to said CQI reporting format and wherein said processing unit is arranged to determine one CQI value (409) per subcarrier group for each transmit antenna (403-1, 403-2, 403-3, 403-4) of the selected transmit antenna configuration.

3. The mobile terminal device (401) according to claim 1 or 2, wherein the processing unit (406) is arranged to adapt the granularity in frequency of CQI reporting to the number m of transmit antennas of the selected transmit antenna configuration.

4. The mobile terminal device (401) according to claim 2, wherein the number of subcarrier groups Q is based on the number m of transmit antennas of the selected transmit antenna configuration such that the number P_{CQI} of CQI values (409) determined for the m transmit antennas of the selected transmit antenna configuration is substantively the same for different selected transmit antenna configurations having different number of transmit antennas.

5. The mobile terminal device (401) according to claim 2 or 4, wherein said Q subcarrier groups are divided into T non-overlapping subsets according to said CQI reporting format and wherein the transmitter (407) is arranged to transmit said P_{CQI} CQI values (409) during T time periods, such that the CQI values relating to the subcarrier groups of one subset are transmitted in each time period.

6. The mobile terminal device (401) according to claim 1 or 2, wherein the processing unit (406) is arranged to adapt the granularity in time of CQI reporting to the number of transmit antennas of the selected transmit antenna configuration.

7. The mobile terminal device (401) according to claim 6, wherein the transmitter (407) is arranged to transmit said P_{CQI} number of CQI values during T number of time periods and wherein T depends on the number of transmit antennas of the selected transmit antenna configuration.

8. The mobile terminal device (401) according to any of claims 1-7, wherein said processing unit (406) is further arranged to select said selected antenna configuration and to establish antenna configuration information (411) to be transmitted to said base station (400) in said feedback signal (408), which antenna configuration information describes said selected antenna configuration.

9. The mobile terminal device (401) according to claim 8, wherein said transmitter (407) is arranged to transmit said antenna configuration information (411) in said feedback signal (408) by means of puncturing the least significant bits of said CQI values (409) in a fixed or random pattern.

10. A method in a mobile terminal device (401) comprising:
receiving (500) a signal from M number of transmit antennas (403-1, 403-2, 403-3, 403-4), which signal includes a number of subcarriers (412);
wherein the method is **characterized by** further comprising:
determining (501) a channel quality indicator, CQI, reporting format for a collection of said subcarriers based on a selected transmit antenna configuration associated with said collection of subcarriers, wherein said CQI reporting format is adapted to the selected transmit antenna configuration such that the granularity of CQI reporting depends on the number m of transmit antennas of the selected transmit antenna configuration;
determining (502) P_{CQI}, number of CQI values, (409) relating to said collection of subcarriers in accordance with the determined CQI reporting format; and
transmitting (503) said P_{CQI} CQI values to a base station (400) in a feedback signal (408).

11. The method according to claim 10, wherein said collection of subcarriers is divided into Q number of non-overlapping subcarrier groups (1, 2, 3) according to said CQI reporting format and wherein one CQI value (409) per subcarrier group for each transmit antenna of the selected transmit antenna configuration is determined..

12. The method according to claim 10 or 11, wherein the granularity in frequency of CQI reporting is adapted to the number m of transmit antennas of the selected transmit antenna configuration.

13. The method according to claim 11, wherein said Q subcarrier groups are divided into T non-overlapping subsets according to said CQI reporting format and wherein said P_{CQI} of CQI values (409) is transmitted during T time periods, such that the CQI values relating to the subcarrier groups of one subset are transmitted in each time period.

14. The method according to claim 10 or 11, wherein the granularity in time of CQI reporting is adapted to the number of transmit antennas of the selected transmit antenna configuration.

15. The method according to claim 14, wherein said P_{CQI} number of CQI values is transmitted during T number of time periods and wherein T depends on the number of transmit antennas of the selected transmit antenna configuration.

16. The method according to any of claims 10-15, further comprising selecting said selected transmit antenna configuration, establishing antenna configuration information (411), which antenna configuration information describes said selected antenna configuration, and transmitting said antenna configuration information to said base station in said feedback signal (408).

17. The method according to claim 16, wherein said antenna configuration information specifies a transmit antenna subset associated with each subcarrier (412) of said collection of subcarriers.

18. The method according to claim 16, wherein said antenna configuration information (411) specifies a transmit antenna decoding order associated with each subcarrier of said collection of subcarriers.

19. The method according to any of claims 16-18, wherein said antenna configuration information is transmitted in said feedback signal (408) by means of puncturing the least significant bits of said CQI values (409) in a fixed or random pattern.

20. A base station (400) for use in a wireless communications system (420), comprising:
a transmitter (410) for transmitting a signal (404) including a number of subcarriers (412) from M number of transmit antennas (403-1, 403-2, 403-3, 403-4);
a receiver (421) for receiving a feedback signal (408) from a mobile terminal device (401);
wherein the base station (400) is **characterized by** further comprising:
a processing unit (402) for processing said feedback signal to extract P_{CQI}, number of CQI values, (409) relating to a collection of said subcarriers and to extract antenna configuration information (411) specifying a selected transmit antenna configuration, which CQI values are in accordance with a CQI reporting format which depends on the selected transmit antenna configuration such that the granularity of the CQI reporting depends on the number of antennas of the selected transmit antenna configuration.

21. The base station (400) according to claim 20, wherein said collection of subcarriers are divided into Q number of non-overlapping subcarrier groups (1, 2, 3) according to said CQI reporting format and wherein each of said CQI values (409) is associated with one of said subcarrier groups and one of the transmit antennas of the selected transmit antenna configuration.

22. The base station (400) according to claim 20 or 21, wherein said antenna configuration information (411) specifies a transmit antenna subset associated with each subcarrier (412) of said collection of subcarriers.

23. The base station (400) according to claim 20 or 21, wherein said antenna configuration information (411) specifies a transmit antenna decoding order associated with each subcarrier (412) of said number of subcarriers.

24. The base station (400) according to claims 20 or 21, wherein said processing unit (402) is arranged to extract said antenna configuration information (411) from least significant bits of said CQI values (409) that have been punctured in a fixed or random pattern to carry said antenna configuration information.

## Patentansprüche

1. Mobiles Endgerät (401) zur Verwendung in einem Drahtloskommunikationssystem (420), umfassend:
einen Empfänger (405) zum Empfangen eines Signals (404) von einer Anzahl M von Sendeantennen (403-1, 403-2, 403-3, 403-4), wobei das Signal eine Anzahl von Unterträgern (412) umfasst;
wobei das mobile Endgerät (401) **dadurch gekennzeichnet ist, dass** es ferner umfasst:
eine Rechnereinheit (406) zum Bestimmen eines Berichtsformats eines Kanalqualitätsindikators, CQI, für eine Ansammlung der Unterträger auf der Grundlage einer mit der Ansammlung von Unterträgern in Verbindung stehenden ausgewählten Sendeantennenkonfiguration und zum Bestimmen von P_{CQI}, Anzahl der CQI-Werte, (409) in Bezug auf die Ansammlung von Unterträgern gemäß einem bestimmten CQI-Berichtsformat, wobei die Rechnereinheit angeordnet ist, um das CQI-Berichtsformat an die ausgewählte Sendeantennenkonfiguration anzupassen, so dass die Granularität des CQI-Berichts von der Anzahl m der Sendeantennen der ausgewählten Sendeantennenkonfiguration abhängt; und
einen Sender (407) zum Übertragen der P_{CQI} CQI-Werte an eine Basisstation (400) in einem Rückmeldesignal (408).

2. Mobiles Endgerät (401) nach Anspruch 1, wobei die Ansammlung von Unterträgern (401) gemäß dem CQI-Berichtsformat in eine Anzahl Q von nicht überlappenden Unterträgergruppen (1, 2, 3) unterteilt ist und wobei die Rechnereinheit angeordnet ist, um einen CQI-Wert (409) pro Unterträgergruppe für jede Sendeantenne (403-1, 403-2, 403-3, 403-4) der ausgewählten Sendeantennenkonfiguration zu bestimmen.

3. Mobiles Endgerät (401) nach Anspruch 1 oder 2, wobei die Rechnereinheit (406) angeordnet ist, um die Frequenzgranularität des CQI-Berichts an die Anzahl m von Sendeantennen der ausgewählten Sendeantennenkonfiguration anzupassen.

4. Mobiles Endgerät (401) nach Anspruch 2, wobei die Anzahl Q der Unterträgergruppen auf der Anzahl m von Sendeantennen der ausgewählten Sendeantennenkonfiguration basiert, so dass die Anzahl P_{CQI} der CQI-Werte (409), die für die m Sendeantennen der ausgewählten Sendeantennenkonfiguration bestimmt ist, für verschiedene ausgewählte Sendeantennenkonfigurationen mit unterschiedlicher Anzahl von Sendeantennen im Wesentlichen gleich ist.

5. Mobiles Endgerät (401) nach Anspruch 2 oder 4, wobei die Q Unterträgergruppen gemäß dem CQI-Berichtsformat in T nicht überlappende Untergruppen unterteilt sind und wobei der Sender (407) angeordnet ist, um die P_{CQI} CQI-Werte (409) während T Zeiträumen zu übertragen, so dass die CQI-Werte in Bezug auf die Unterträgergruppen einer Untergruppe in jedem Zeitraum übertragen werden.

6. Mobiles Endgerät (401) nach Anspruch 1 oder 2, wobei die Rechnereinheit (406) angeordnet ist, um die Zeitgranularität des CQI-Berichts an die Anzahl von Sendeantennen der ausgewählten Sendeantennenkonfiguration anzupassen.

7. Mobiles Endgerät (401) nach Anspruch 6, wobei der Sender (407) angeordnet ist, um die Anzahl P_{CQI} der CQI-Werte während einer Anzahl T von Zeiträumen zu übertragen und wobei T von der Anzahl von Sendeantennen der ausgewählten Sendeantennenkonfiguration abhängt.

8. Mobiles Endgerät (401) nach einem der Ansprüche 1 bis 7, wobei die Rechnereinheit (406) ferner angeordnet ist, um die ausgewählte Antennenkonfiguration auszuwählen und um Antennenkonfigurationsinformationen (411), die an die Basisstation (400) übertragen werden sollen, in dem Rückmeldesignal (408) zu bestimmen, wobei die Antennenkonfigurationsinformationen die ausgewählte Antennenkonfiguration beschreiben.

9. Mobiles Endgerät (401) nach Anspruch 8, wobei der Sender (407) angeordnet ist, um die Antennenkonfigurationsinformationen (411) in dem Rückmeldesignal (408) mittels Punktieren der niedrigstwertigen Bits der CQI-Werte (409) in einem festgelegten oder beliebigen Muster zu übertragen.

10. Verfahren in einem mobilen Endgerät (401), umfassend:
Empfangen (500) eines Signals von einer Anzahl M von Sendeantennen (403-1, 403-2, 403-3, 403-4), wobei das Signal eine Anzahl von Unterträgern (412) umfasst;
wobei das Verfahren **dadurch gekennzeichnet ist, dass** es ferner umfasst:
Bestimmen (501) eines Berichtsformats eines Kanalqualitätsindikators, CQI, für eine Ansammlung der Unterträger auf der Grundlage einer mit der Ansammlung von Unterträgern in Verbindung stehenden ausgewählten Sendeantennenkonfiguration, wobei das CQI-Berichtsformat an die ausgewählte Sendeantennenkonfiguration angepasst ist, so dass die Granularität des CQI-Berichts von der Anzahl m von Sendeantennen der ausgewählten Sendeantennenkonfiguration abhängt;
Bestimmen (502) von P_{CQI}, Anzahl der CQI-Werte, (409) in Bezug auf die Ansammlung von Unterträgern gemäß dem bestimmten CQI-Berichtsformat; und
Übertragen (503) der P_{CQI} CQI-Werte an eine Basisstation (400) in einem Rückmeldesignal (408).

11. Verfahren nach Anspruch 10, wobei die Ansammlung von Unterträgern gemäß dem CQI-Berichtsformat in eine Anzahl Q von nicht überlappenden Unterträgergruppen (1, 2, 3) unterteilt ist und wobei ein CQI-Wert (409) pro Unterträgergruppe für jede Sendeantenne der ausgewählten Sendeantennenkonfiguration bestimmt wird.

12. Verfahren nach Anspruch 10 oder 11, wobei die Frequenzgranularität des CQI-Berichts an die Anzahl m von Sendeantennen der ausgewählten Sendeantennenkonfiguration angepasst ist.

13. Verfahren nach Anspruch 11, wobei die Q Unterträgergruppen gemäß dem CQI-Berichtsformat in T nicht überlappende Untergruppen unterteilt sind und wobei die P_{CQI} der CQI-Werte (409) während T Zeiträumen übertragen werden, so dass die CQI-Werte in Bezug auf die Unterträgergruppen einer Untergruppe in jedem Zeitraum übertragen werden.

14. Verfahren nach Anspruch 10 oder 11, wobei Zeitgranularität des CQI-Berichts an die Anzahl von Sendeantennen der ausgewählten Sendeantennenkonfiguration angepasst ist.

15. Verfahren nach Anspruch 14, wobei die Anzahl P_{CQI} der CQI-Werte während einer Anzahl T von Zeiträumen übertragen wird und wobei T von der Anzahl von Sendeantennen der ausgewählten Sendeantennenkonfiguration abhängt.

16. Verfahren nach einem der Ansprüche 10 bis 15, ferner umfassend Auswählen der ausgewählten Antennenkonfiguration, Bestimmen von Antennenkonfigurationsinformationen (411), wobei die Antennenkonfigurationsinformationen die ausgewählte Antennenkonfiguration beschreiben, und Übertragen der Antennenkonfigurationsinformationen an die Basisstation in dem Rückmeldesignal (408).

17. Verfahren nach Anspruch 16, wobei die Antennenkonfigurationsinformationen eine Sendeantennen-Untergruppe, die mit jedem Unterträger (412) der Ansammlung von Unterträgern in Verbindung steht, festlegen.

18. Verfahren nach Anspruch 16, wobei die Antennenkonfigurationsinformationen (411) einen mit jedem Unterträger der Ansammlung von Unterträgern in Verbindung stehenden Sendeantennen-Dekodierbefehl festlegen.

19. Verfahren nach einem der Ansprüche 16 bis 18, wobei die Antennenkonfigurationsinformationen in dem Rückmeldesignal (408) mittels Punktieren der niedrigstwertigen Bits der CQI-Werte (409) in einem festgelegten oder beliebigen Muster übertragen werden.

20. Basisstation (400) zur Verwendung in einem Drahtloskommunikationssystem (420), umfassend:
einen Sender (410) zum Übertragen eines Signals (404) mit einer Anzahl von Unterträgern (412) von einer Anzahl M von Sendeantennen (403-1, 403-2, 403-3, 403-4);
einen Empfänger (421) zum Empfangen eines Rückmeldesignals (408) von einem mobilen Endgerät (401);
wobei die Basisstation (400) **dadurch gekennzeichnet ist, dass** sie ferner umfasst:
eine Rechnereinheit (402) zum Verarbeiten des Rückmeldesignals um P_{CQI}, Anzahl der CQI-Werte, (409) in Bezug auf eine Ansammlung der Unterträger zu extrahieren und um Antennenkonfigurationsinformationen (411), die eine ausgewählte Sendeantennenkonfiguration festlegen, zu extrahieren, wobei die CQI-Werte einem bestimmten CQI-Berichtsformat entsprechen, das von der ausgewählten Sendeantennenkonfiguration abhängt, so dass die Granularität des CQI-Berichts von der Anzahl von Antennen der ausgewählten Sendeantennenkonfiguration abhängt.

21. Basisstation (400) nach Anspruch 20, wobei die Ansammlung von Unterträgern gemäß dem CQI-Berichtsformat in eine Anzahl Q von nicht überlappenden Unterträgergruppen (1, 2, 3) unterteilt ist und wobei jeder der CQI-Werte (409) mit einer der Unterträgergruppen und einer der Sendeantennen der ausgewählten Sendeantennenkonfigurationen in Verbindung steht.

22. Basisstation (400) nach Anspruch 20 oder 21, wobei die Antennenkonfigurationsinformationen (411) eine mit jedem Unterträger (412) der Ansammlung von Unterträgern in Verbindung stehende Sendeantennen-Untergruppe festlegt.

23. Basisstation (400) nach Anspruch 20 oder 21, wobei die Antennenkonfigurationsinformationen (411) einen mit jedem Unterträger (412) der Anzahl von Unterträgern in Verbindung stehenden Sendeantennen-Dekodierbefehl festlegt.

24. Basisstation (400) nach Anspruch 20 oder 21, wobei die Rechnereinheit (402) angeordnet ist, um die Antennenkonfigurationsinformationen (411) aus niedrigstwertigen Bits der CQI-Werte (409), die in einem festgelegten oder beliebigen Muster punktiert wurden, um die Antennenkonfigurationsinformationen zu tragen, zu extrahieren.

## Revendications

1. Dispositif terminal mobile (401) pour l'utilisation dans un système de communication sans fil (420), comprenant :
un récepteur (405) pour recevoir un signal (404) à partir d'un nombre M d'antennes émettrices (403-1, 403-2, 403-3, 403-4), lequel signal comprend un certain nombre de sous-porteuses (412) ;
dans lequel le dispositif terminal mobile (401) est **caractérisé en ce qu'**il comprend en outre :
une unité de traitement (406) pour déterminer un format de rapport d'indicateur de qualité de canal, CQI, pour une gamme desdites sous-porteuses sur la base d'une configuration d'antennes émettrices sélectionnée associée à ladite gamme de sous-porteuses et pour déterminer un nombre P_{CQI} de valeurs de CQI (409) concernant ladite gamme de sous-porteuses en fonction d'un format de rapport de CQI déterminé, dans lequel l'unité de traitement est agencée pour adapter le format de rapport de CQI à la configuration d'antennes émettrices sélectionnée de manière que la granularité de rapport de CQI dépende du nombre m d'antennes émettrices de la configuration d'antennes émettrices sélectionnée ; et
un émetteur (407) pour transmettre lesdites P_{CQI} valeurs de CQI à une station de base (400) dans un signal de rétroaction (408).

2. Dispositif terminal mobile (401) selon la revendication 1, dans lequel ladite gamme de sous-porteuses (401) est divisée en un nombre Q de groupes de sous-porteuses sans chevauchement (1, 2, 3) en fonction dudit format de rapport de CQI et dans lequel ladite unité de traitement est agencée pour déterminer une valeur de CQI (409) par groupe de sous-porteuses pour chaque antenne émettrice (403-1, 403-2, 403-3, 403-4) de la configuration d'antennes émettrices sélectionnée.

3. Dispositif terminal mobile (401) selon la revendication 1 ou 2, dans lequel l'unité de traitement (406) est agencée pour adapter la granularité en fréquence du rapport de CQI au nombre m d'antennes émettrices de la configuration d'antennes émettrices sélectionnée.

4. Dispositif terminal mobile (401) selon la revendication 2, dans lequel le nombre de groupes de sous-porteuses Q est basé sur le nombre m d'antennes émettrices de la configuration d'antennes émettrices sélectionnée de manière que le nombre P_{CQI} de valeurs de CQI (409) déterminé pour les m antennes émettrices de la configuration d'antennes émettrices sélectionnée est sensiblement le même pour des configurations d'antennes émettrices sélectionnées différentes ayant un nombre d'antennes émettrices différent.

5. Dispositif terminal mobile (401) selon la revendication 2 ou 4, dans lequel lesdits Q groupes de sous-porteuses sans chevauchement sont divisés en T sous-ensembles sans chevauchement en fonction dudit format de rapport de CQI et dans lequel l'émetteur (407) est agencé pour transmettre lesdites P_{CQI} valeurs de CQI (409) durant T périodes de temps, de manière que les valeurs de CQI relatives aux groupes de sous-porteuses d'un sous-ensemble soient transmises dans chaque période de temps.

6. Dispositif terminal mobile (401) selon la revendication 1 ou 2, dans lequel l'unité de traitement (406) est agencée pour adapter la granularité en temps du rapport de CQI au nombre d'antennes émettrices de la configuration d'antennes émettrices sélectionnée.

7. Dispositif terminal mobile (401) selon la revendication 6, dans lequel l'émetteur (407) est agencé pour transmettre ledit nombre P_{CQI} de valeurs de CQI durant un nombre T de périodes de temps et dans lequel T dépend du nombre d'antennes émettrices de la configuration d'antennes émettrices sélectionnée.

8. Dispositif terminal mobile (401) selon l'une quelconque des revendications 1 à 7, dans lequel ladite unité de traitement (406) est agencée en outre pour sélectionner ladite configuration d'antennes sélectionnée et pour établir des informations de configuration d'antennes (411) à transmettre à ladite station de base (400) dans ledit signal de rétroaction (408), lesquelles informations de configuration d'antennes décrivent ladite configuration d'antennes émettrices.

9. Dispositif terminal mobile (401) selon la revendication 8, dans lequel ledit émetteur (407) est agencé pour transmettre lesdites informations de configuration d'antennes (411) dans ledit signal de rétroaction (408) au moyen d'une perforation des bits les moins significatifs desdites valeurs de CQI (409) dans un schéma fixe ou aléatoire.

10. Procédé dans un dispositif terminal mobile (401) comprenant :
la réception (500) d'un signal à partir d'un nombre M d'antennes émettrices (403-1, 403-2, 403-3, 403-4), lequel signal comprend un certain nombre de sous-porteuses (412) ;
dans lequel le procédé est **caractérisé en ce qu'**il comprend en outre :
la détermination (501) d'un format de rapport d'indicateur de qualité de canal, CQI, pour une gamme desdites sous-porteuses sur la base d'une configuration d'antennes émettrices sélectionnée associée à ladite gamme de sous-porteuses et dans lequel ledit format de rapport de CQI est adapté à la configuration d'antennes émettrices sélectionnée de manière que la granularité de rapport de CQI dépend du nombre m d'antennes émettrices de la configuration d'antennes émettrices sélectionnée ;
la détermination (502) d'un nombre P_{CQI} de valeurs de CQI (409) concernant ladite gamme de sous-porteuses en fonction d'un format de rapport de CQI déterminé ; et
la transmission (503) desdites P_{CQI} valeurs de CQI à une station de base (400) dans un signal de rétroaction (408).

11. Procédé selon la revendication 10, dans lequel ladite gamme de sous-porteuses est divisée en un nombre Q de groupes de sous-porteuses sans chevauchement (1, 2, 3) en fonction dudit format de rapport de CQI et dans lequel une valeur de CQI (409) par groupe de sous-porteuses pour chaque antenne émettrice de la configuration d'antennes émettrices sélectionnée est déterminée.

12. Procédé selon la revendication 10 ou 11, dans lequel la granularité en fréquence du rapport de CQI est adaptée au nombre m d'antennes émettrices de la configuration d'antennes émettrices sélectionnée.

13. Procédé selon la revendication 11, dans lequel lesdits Q groupes de sous-porteuses sont divisés en T sous-ensembles sans chevauchement en fonction dudit format de rapport de CQI et dans lequel lesdites P_{CQI} valeurs de CQI (409) sont transmises durant T périodes de temps, de manière que les valeurs de CQI relatives aux groupes de sous-porteuses d'un sous-ensemble soient transmises dans chaque période de temps.

14. Procédé selon la revendication 10 ou 11, dans lequel la granularité en temps du rapport de CQI est adaptée au nombre d'antennes émettrices de la configuration d'antennes émettrices sélectionnée.

15. Procédé selon la revendication 14, dans lequel ledit nombre P_{CQI} de valeurs de CQI est transmis durant un nombre T de périodes de temps et dans lequel T dépend du nombre d'antennes émettrices de la configuration d'antennes émettrices sélectionnée.

16. Procédé selon l'une quelconque des revendications 10 à 15, comprenant en outre la sélection de ladite configuration d'antennes sélectionnée, l'établissement d'informations de configuration d'antennes (411), lesquelles informations de configuration d'antennes décrivent ladite configuration d'antennes émettrices et la transmission desdites informations de configuration d'antennes à ladite station de base dans ledit signal de rétroaction (408).

17. Procédé selon la revendication 16, dans lequel lesdites informations de configuration d'antennes spécifient un sous-ensemble d'antennes émettrices associé à chaque sous-porteuse (412) de ladite gamme de sous-porteuses.

18. Procédé selon la revendication 16, dans lequel lesdites informations de configuration d'antennes (411) spécifient un ordre de décodage d'antennes émettrices associé à chaque sous-porteuse de ladite gamme de sous-porteuses.

19. Procédé selon l'une quelconque des revendications 16 à 18, dans lequel lesdites informations de configuration d'antennes sont transmises dans ledit signal de rétroaction (408) au moyen d'une perforation des bits les moins significatifs desdites valeurs de CQI (409) dans un schéma fixe ou aléatoire.

20. Station de base (400) pour l'utilisation dans un système de communication sans fil (420), comprenant :
un émetteur (410) pour transmettre un signal (404) comprenant un certain nombre de sous-porteuses (412) à partir d'un nombre M d'antennes émettrices (403-1, 403-2, 403-3, 403-4) ;
un récepteur (421) pour recevoir un signal de rétroaction (408) à partir d'un dispositif terminal mobile (401) ;
dans lequel la station de base (400) est **caractérisée en ce qu'**elle comprend en outre :
une unité de traitement (402) pour traiter ledit signal de rétroaction pour extraire un nombre P_{CQI} de valeurs de CQI (409) concernant une gamme desdites sous-porteuses et pour extraire des informations de configuration d'antennes (411) spécifiant une configuration d'antennes émettrices sélectionnée, lesquelles valeurs de CQI sont en conformité avec un format de rapport de CQI qui dépend de la configuration d'antennes émettrices sélectionnée de manière que la granularité du rapport de CQI dépende du nombre d'antennes de la configuration d'antennes émettrices sélectionnée.

21. Station de base (400) selon la revendication 20, dans laquelle ladite gamme de sous-porteuses est divisée en un nombre Q de groupes de sous-porteuses sans chevauchement (1, 2, 3) en fonction dudit format de rapport de CQI et dans lequel chacune desdites valeurs de CQI (409) est associée à un des groupes de sous-porteuses et une des antennes émettrices de la configuration d'antennes émettrices sélectionnée.

22. Station de base (400) selon la revendication 20 ou 21, dans laquelle lesdites informations de configuration d'antennes (411) spécifient un sous-ensemble d'antennes émettrices associé à chaque sous-porteuse (412) de ladite gamme de sous-porteuses.

23. Station de base (400) selon la revendication 20 ou 21, dans laquelle lesdites informations de configuration d'antennes (411) spécifient un ordre de décodage d'antennes émettrices associé à chaque sous-porteuse (412) dudit nombre de sous-porteuses.

24. Station de base (400) selon la revendication 20 ou 21, dans laquelle ladite unité de traitement (402) est agencée pour extraire lesdites informations de configuration d'antennes (411) à partir de bits les moins significatifs desdites valeurs de CQI (409) qui ont été perforés dans un schéma fixe ou aléatoire pour porter lesdites informations de configuration d'antennes.
